# EUROPÄISCHE PATENTANMELDUNG

(11) **EP 4 328 563 A1**
(43) Veröffentlichungstag der Anmeldung: **28.02.2024**
(21) Anmeldenummer: 23401027.0
(22) Anmeldetag: 08.08.2023
(51) Int. Cl.: G01N 1/22, G01N 1/24, G01N 15/06, G01N 1/02, G01N 1/40

(54) **ANSCHLUSSEINRICHTUNG FÜR EINE REINHEITSPRÜFANLAGE**

(30) Priorität: 26.08.2022 DE 102022121661
(71) Anmelder: Gläser GmbH, 72160 Horb (DE)
(72) Erfinder: Vogel, Matthias, 78713 Schramberg (DE); Wagner, Florian, 72348 Rosenfeld (DE); Grncso, Lars, 78658 Zimmern ob Rottweil (DE); Elser, Maximilian, 72401 Haigerloch (DE)
(74) Vertreter: Sebastian, Jens

(57) **Zusammenfassung**

Der Gegenstand der vorliegenden Erfindung betrifft eine Anschlusseinrichtung (100) für eine Reinheitsprüfanlage zum Nachweis einer Technischen Sauberkeit, umfassend ein Rohrstück (110), welches einen Transportkanal (115) aufweist, durch welchen ein Transportmedium und/oder Partikel führbar ist/sind, insbesondere ein Ansaugrohrstück, und eine Filtermembran (130), welche an dem Rohrstück (110) so angeordnet ist, dass die durch mit dem Transportmedium geführten Partikel transportierten Partikel sich auf der Filtermembran (130) für eine Reinheitsprüfung ablagern, wobei eine den Transportkanal (115) des Rohrstücks (110) verlängernde Aufsatzeinrichtung (150) an einem Öffnungsbereich des Rohrstücks (110) angeordnet ist und die Filtermembran (130) zwischen dem Rohrstück (110) und der Aufsatzeinrichtung (150) in dem Transportkanal angeordnet ist. Weiter betrifft die Erfindung ein Verfahren sowie eine Filtervorrichtung hierzu.

## Beschreibung

Die Erfindung betrifft eine Anschlusseinrichtung für eine Reinheitsprüfanlage zum Nachweis einer Technischen Sauberkeit gemäß dem Oberbegriff des Anspruchs 1.

Weiter betrifft die Erfindung ein Verfahren zum Filtern von Partikeln zum Nachweis einer technischen Sauberkeit gemäß dem Oberbegriff des Anspruchs 6.

Zudem betrifft die Erfindung eine Filtervorrichtung zum Filtern von Partikeln zum Nachweis einer technischen Sauberkeit gemäß dem Oberbegriff des Anspruchs 10.

In modernen Fertigungsprozessen werden unterschiedlichste Komponenten in komplexen Wertschöpfungs- und Lieferketten zu einem hochwertigen Produkt kombiniert. Grundvoraussetzung dafür ist, dass die verwendeten Bauteile höchsten Ansprüchen genügen. Dies bezieht sich nicht nur auf die Qualität der verwendeten Materialien sowie die Präzision und Qualität der Fertigung, sondern auch auf die Sauberkeit oder Reinheit der Bauteile.

Für Prozesse wie die Funktionalisierung von Oberflächen durch Beschichtung oder Bearbeitung ist eine völlig saubere Oberfläche Grundvoraussetzung. Egal, ob mechanische, optische oder elektronische Komponenten verwendet werden: Bereits kleinste Verschmutzungen führen zu Funktionsverlust (Verkratzen einer Linse, Kurzschluss auf elektronischem Bauteil), Fehlstellen (mangelhafte Schutzbeschichtung, optisch unbefriedigende Lackierung) oder einem Versagen des Fertigen Produkts (Verstopfung von Zuleitungen oder Filtern).

Um solche Effekte zu vermeiden, werden Bauteile nach der Fertigung in sogenannten Reinigungsanlagen aufwändig gesäubert. Die Wirksamkeit der Reinigungsverfahren wird dann mittels der sogenannten Analyse der technischen Sauberkeit oder auch einer Restschmutzanalyse periodisch überprüft.

Das Prüfverfahren sieht wie folgt aus: Die zu prüfenden (gereinigten, sauberen) Werkstücke werden mit dem auch während des industriellen Reinigungsverfahren verwendeten Reiniger unter kontrollierten Bedingungen sehr sorgfältig erneut abgereinigt. Dazu werden die Bauteile in der abgeschlossenen Umgebung einer Reinigungskabine mit Druck abgespritzt oder - je nach konkreter Spezifikation auch geflutet oder durchspült. Der verwendete Reiniger wird komplett in einem Sammelbecken aufgefangen. Eventuell an den Wänden der Kabine anhaftende Partikel werden ebenfalls in das Sammelbecken gespült. Schmutzpartikel sammeln sich im Filter des Ausgusses. Der Filter wird dann unter einem Mikroskop oder auch einem REM ausgewertet.

Diese Methodik weist mehrere, teils kritische Aufgaben auf: Das Prüfverfahren ist stark manuell geprägt - dadurch ist dieses aufwändig -- mindestens zwei Stunden pro Teil. Deshalb ist eine Prüfung oft nur in Stichproben möglich. Es besteht ein Bedarf der Industrie an mehreren Prüfungen, vorzugsweise bis 100% Prüfung. Aktuell ist keine Prozessintegration möglich aufgrund des hohen manueller Prüfaufwands. Das Prüfmedium ist aktuell in der Regel ein Kaltreiniger mit umwelt- und gesundheitsbedenklichen Inhaltsstoffen insbesondere Halogenkohlenwasserstoffe. Wässrige Reiniger zum Beispiel mit Tensiden setzen sich nicht durch, da diese zur Rostbildung, Verkeimung der Anlagen und einer suboptimalen Abreinigungsqualität führen. Im Bereich Elektronik und Elektromobilität scheitert die technische Sauberkeitsprüfung, weil Bauteile wie Platinen oder Batterien weder mit aggressiven Kaltreinigern noch mit Wasser in Berührung kommen dürfen.

Erste Ansätze für rein optische Prüfverfahren, die zwar deutlich schneller sind und sich in den Prozess integrieren lassen, sind nur für wenige Anwendungen geeignet, da z.B. Probleme bei Hinterschneidungen, Bohr- und Gewindelöchern usw. auftreten. Hier besteht ein Bedarf nach neuen Ansätzen zur technischen Reinheitsprüfung, insbesondere zur Trockenprüfung hochempfindlicher elektronischer Bauteile, die nicht nass geprüft werden dürfen und zur Linienintegration und Automatisierung der Prüfungsverfahren.

Aus dem Stand der Technik sind allgemein Filter und Filterverfahren auf dem Gebiet der technischen Sauberkeit bekannt. Derartige Filter und Filterverfahren sind ausgelegt, um eine hinreichend geringe Kontamination sauberkeitssensibler technischer Bauteile mit schädlichen Partikeln nachzuweisen. Dabei sollen die Filter und Filterverfahren nachweisen, dass unvermeidliche Partikelverunreinigungen oder Restschmutz in einem technischen System so gering sind, dass es zu keinem kurzfristigen oder langfristigen Funktionseinschränkungen und Systemschädigungen kommt, dieses System also im Sinne der Technischen Sauberkeit als hinreichend sauber gelten. Verschiedene Filter und Filterverfahren sind hierfür bekannt.

So offenbart die DE 33 13 271 C2 einen wegwerfbaren Filter mit einem Gehäuse, der zwei Formteile aus organischem Kunststoff, die je eine zylindrische Seitenwand und eine Stirnwand mit einer in der Nähe der Mitte der Stirnwand liegenden Flüssigkeitsdurchtrittsöffnung umfasst, wobei die zylindrischen Seitenwände der beiden Formteile aneinander liegend ineinandergeschoben sind, eine Filterscheibe zwischen den beiden Formteilen angeordnet ist und ein verformbarer Ring aus organischem Kunststoff die ineinandergeschobenen Wände der beiden Formteile umgreift und die Formteile in zusammengefügtem Zustand hält, wobei der verformbare Ring durch Deformieren entfernbar ist, sodass die Formteile zum Entnehmen der Filterscheibe voneinander trennbar sind wobei die Formteile je eine Ringfläche in der Nähe des Umfanges der Stirnwand und konzentrisch zur zylindrischen Seitenwand aufweisen, die Filterscheibe mit ihrem Randbereich zwischen den Ringflächen der beiden Formteile angeordnet ist, ein Dichtungsring zwischen der Peripherie der Filterscheibe und einer der Ringflächen liegt und die Seitenwände der Formteile im zusammengefügten Zustand genügend ineinandergeschoben sind, um den Dichtungsring zu verdichten und die Peripherie der Filterscheibe abzudichten, und der aus organischem Kunststoff bestehende verformbare Ring mindestens einen die Deformierbarkeit des Ringes ergebenden, im Querschnitt verringerten Umfangsbereich aufweist, sodass der Ring durch Dehnen oder Zerreißen entfernbar ist.

Aus der EP 0 463 897 B1 ist ein Halter für kreisförmige Filtermembranen bekannt, mit einem Mittenhalteteil, einem Umfangshalteteil, die beide die Filtermembran halten, und mit einer Einrichtung zum Separieren eines Halteteils relativ vom anderen durch axiales Verstellen oder Kippen und somit Aufheben der Halterung des Umfangsteils der Membran durch das Umfangshalteteil, wobei die Einrichtung zum Separieren der zwei Halteteile aus einem fingerähnlichen Stempel besteht, dessen Achse senkrecht zu den oberen Flächen des Mitten- und des Umfangshalteteiles verläuft, der nahe dem Umfang des Mittenhalteteils angeordnet und so ausgelegt ist, dass er axial bewegt werden kann, um das Mittenteil vom Umfangsteil des Halters zu trennen.

Aus der DE 10 2005 049 227 B4 ist eine Vorrichtung zur Überwachung der Partikelfracht eines Fluids bekannt, mit einer Messkammer mit einem Einlauf und einem Auslauf für das Fluid, mit einem in der Messkammer zwischen dem Einlauf und dem Auslauf angeordneten Partikelsieb zum Zurückhalten von Partikeln, deren Größe größer oder gleich einer vorbestimmten Mindestgröße ist, wobei das Partikelsieb die Messkammer in eine erste Teilkammer zwischen dem Einlauf und dem Partikelsieb und eine zweite Teilkammer zwischen dem Partikelsieb und dem Auslauf unterteilt, mindestens einer in der Messkammer angeordneten Beleuchtungsvorrichtung zur Beleuchtung des Partikelsiebes, sowie mindestens einer in der Messkammer angeordneten Bildaufnahmevorrichtung zur Erfassung eines Abbildes des Partikelsiebes.

Aus der DE 10 2010 041 930 A1 ist eine Vorrichtung für das Analysieren der Verschmutzung von Gegenständen, insbesondere von Werkstücken bekannt. In der Vorrichtung gibt es eine Spülzone für das Abspülen von angelagerten Schmutzpartikeln mittels eines Fluids. Die Vorrichtung hat eine Sammeleinrichtung, die ein Rückhaltemittel aufweist. Die Vorrichtung enthält eine Messeinrichtung für das Messen einer physikalischen Größe von in dem Rückhaltemittel aufgefangenen Schmutzpartikeln. Es ist weiter ein Filter vorgesehen. Der Filter ist als ein Abschnitt in einem Filterband ausgebildet. Dieses Filterband kann von einer Abwickelstation zu einer Aufwickelstation als Transporteinrichtung für den Abschnitt in dem Filterband bewegt werden.

Aus der DE 10 2012 218 489 A1 ist eine Vorrichtung für das Auffangen einer in einem Fluidvolumen aufgenommenen Schmutzpartikelfracht mit einer insbesondere bewegbaren flächigen, vorzugsweise bandförmigen Filtermembran bekannt, die zum Aufnehmen von Schmutzpartikeln durch eine Filterstation geführt ist, die einen Grundkörper mit einem Zuleitungskanal für das Zuführen von mit Schmutzpartikeln befrachtetem Fluid aufweist. Die Vorrichtung hat einen an den Grundkörper anlegbaren verlagerbar angeordneten Gegenkörper, der mit einer in dem Grundkörper ausgebildeten Ausnehmung und/oder einer in dem Gegenkörper ausgebildeten Ausnehmung bei Anlegen des Gegenkörpers an den Grundkörper eine Filterkammer definiert, die durch die bandförmige Filtermembran in einen grundkörperseitigen Abschnitt und einen gegenkörperseitigen Abschnitt geteilt wird.

Die Hauptaufgabe aller Reinheitsprüfanlagen im Bereich Technische Sauberkeit ist es, möglichst viele Partikel, die sich auf dem zu prüfenden Bauteil befunden haben, auf eine Filtermembran zu bekommen, die dann automatisiert unter einem Mikroskop ausgewertet wird. Hierzu werden Partikel über ein Transportmedium, meist durch einen Ansaugstrom, Partikel durch ein Rohr oder einen Schlauch zu einer Filtermembran, meist am hinteren Ende des Saugschlauches, transportiert. Das bedeutet, dass sämtliche Partikel durch den Schlauch, meist ein Ringelschlauch, transportiert werden müssen, bevor sie auf der Membran landen. Der Ringelschlauch lässt sich nur sehr aufwändig reinigen, weshalb die Wiederfindungsrate der Partikel sehr gering ist.

Es ist deshalb eine Aufgabe der vorliegenden Erfindung, eine Anschlusseinrichtung für eine Reinheitsprüfanlage zum Nachweis einer Technischen Sauberkeit und ein Verfahren zum Filtern von Partikeln zum Nachweis einer technischen Sauberkeit aufweisen, mit welcher sich qualitativ hochwertige Testergebnisse realisieren lassen und welche für eine erhöhte Prüfautomatisierung geeignet sind.

Insbesondere ist es eine Aufgabe der vorliegenden Erfindung, eine zerstörungsfreie Prüfung der Bauteile zu gewährleisten, wobei vorzugsweise mit dem Medium geprüft wird, mit welchem das Bauteil später auch in Berührung kommt. Beispielsweise wird eine Elektronik oder ein Luftfilter mit Luft beprobt, ein Zahnrad eines Getriebes wird mit einem flüssigen Medium beprobt.

Diese und weitere Aufgaben werden ausgehend von einer Anschlusseinrichtung für eine Reinheitsprüfanlage zum Nachweis einer Technischen Sauberkeit gemäß Anspruch 1, einem Verfahren zum Filtern von Partikeln zum Nachweis einer technischen Sauberkeit gemäß Anspruch 6 und einer Filtervorrichtung nach Anspruch 10 gelöst. Vorteilhafte Weiterbildungen der Erfindung sind in den abhängigen Ansprüchen angegeben.

Die Erfindung schließt die technische Lehre ein, dass bei einer Anschlusseinrichtung für eine Reinheitsprüfanlage zum Nachweis einer Technischen Sauberkeit, umfassend ein Rohrstück, welches einen Transportkanal aufweist, durch welchen ein Transportmedium und/oder Partikel führbar ist/sind, insbesondere ein Ansaugrohrstück, und eine Filtermembran, welche an dem Rohrstück so angeordnet ist, dass die mit dem Transportmedium transportierten Partikel sich auf der Filtermembran für eine Reinheitsprüfung ablagern, vorgesehen ist, dass eine den Transportkanal des Rohrstücks verlängernde Aufsatzeinrichtung an einem Öffnungsbereich des Rohrstücks angeordnet ist und die Filtermembran zwischen dem Rohrstück und der Aufsatzeinrichtung in dem Transportkanal angeordnet ist, und insbesondere so nahe wie möglich an der Eintrittsöffnung liegt, vorzugsweise maximal 65 mm, weiter bevorzugt maximal 60mm und am meisten bevorzugt maximal 50mm entfernt. Der Öffnungsbereich des Rohrstücks ist der Einlassbereich, durch den mittels Ansaugstrom Restpartikel zu der Filtermembran angesaugt werden. Die Filtermembran ist mittels der Anschlusseinrichtung deutlich näher an dem zu prüfenden Bauteil angeordnet. Der Abstand liegt bevorzugt im Bereich von 0 bis 50 mm. Je nach Bauteil und. Partikelgröße lassen sich auch andere Abstände realisieren. Bevorzugt ist ein Abstand von dem Bauteil, genauer der zu prüfenden Oberfläche des Bauteils zu der Filtermembran von 0 bis 65 mm, bevorzugt von 0 bis 60 mm und am meisten bevorzugt von 0 bis 50 mm. Noch kürzere Abstände können realisiert werden beispielsweise im Bereich von 5 bis 15 mm. Durch die Verlagerung der Membran hin zu der Frontseite oder Einlassseite der Anschlusseinrichtung wird eine kürzere Distanz realisiert, welche angesaugte Partikel zu der Membran zurücklegen müssen. Die kürzere Distanz ist, wie Versuche gezeigt haben, wichtig im Hinblick auf die Unversehrtheit der Partikel. Auf langen Saugstrecken, wie Sie aus dem Stand der Technik bekannt sind, werden die Partikel aufgrund von einwirkenden Kräften zerstört, beispielsweise durch Umformung, Abrieb, Bruch etc. Ein zuvor in seiner Größe kritischer Partikel wird bei längeren Distanzen eher zerkleinert und das Bauteil würde somit fälschlicherweise die Sauberkeitsprüfung bestehen. Die kurze Distanz, die die Partikel bei dieser vorliegenden Erfindung im Luftstrom zurücklegen müssen, verringert genau diese Manipulation der einzelnen Partikel auf ein Minimum. Das Verfahren ist schonender für die Partikel und bietet damit realitätsnahe Prüfungsergebnisse.

In der Technischen Sauberkeit - kurz TecSa -- werden in der Regel zuvor gereinigte Bauteile bzw. Baugruppen hinsichtlich ihrer partikulären Restverschmutzung untersucht. Dazu wird das Bauteil nach dem Reinigen mittels hochreinem Reinigungsmedium, dem Spülmedium, abgespült bzw. geflutet oder mittels eines Transportmediums wie beispielsweise Luft von dem zu prüfenden Bauteil hin zu einer Filtermembran abgesaugt. Das Transportmedium mit den Partikeln wird über eine vorzugsweise als Filtermembraneinheit oder kurz Filtermembran ausgebildete Filtereinheit oder kurz Filter abgesaugt; die in dem Medium gelösten Restschmutzpartikel lagern sich auf einer entnehmbaren bzw. auswechselbaren Filtermembran ab. Im Anschluss an die Extraktion der Restschmutzpartikel wird die Filtermembran aus dem Membranhalter entnommen und optisch ausgewertet. Bei der optischen Auswertung werden die Größe (Unterteilung in Größenklassen) und Anzahl der Partikel sowie evtl. weitere Eigenschaften (Material, Glanz, etc.) ermittelt. Die jeweils zulässigen Grenzwerte sind abhängig von der Funktion des Bauteils.

Die Aufsatzeinrichtung kann einteilig oder mehrteilig ausgebildet sein. In einer Ausführungsform ist die Aufsatzeinrichtung einteilig mit einem Basiskörper ausgebildet. In einer bevorzugten Ausführungsform ist die Aufsatzeinrichtung mehrteilig ausgebildet. Hierbei weist die mehrteilige Aufsatzeinrichtung einen ringförmigen Basiskörper und mindestens ein Zwischenstück auf. Das Zwischenstück ist beispielsweise ein Ring, mit dem sich eine zwischen Rohrstück und Aufsatzeinrichtung angeordnete Membran gegen das Rohrstück halten lässt.

Für das Absaugen der Restpartikel werden diese über einen Schlauch oder ein Rohr der Filtermembran zugeführt. Die Filtermembran ist so angeordnet, dass sämtliche Restpartikel, die mit dem Transportmedium durch das Rohr transportiert werden, die Filtermembran erreichen. Diese setzen sich dann an der Filtermembran ab, während das Transportmedium die Filtermembran passiert. Um zu verhindern, dass sich Restpartikel während des Transports auch an dem Rohr absetzen, ist eine Aufsatzeinrichtung vorgesehen. Die Aufsatzeinrichtung umfasst neben dem Rohrstück, welches beispielsweise auch ein Rohrstutzen, ein Rohrstückbereich, eine Rohrmündung oder andere Teile des Rohrs und/oder Schlauch sein können, eine das Rohr verlängernde Aufsatzeinrichtung. Die Aufsatzeinrichtung wird einlassseitig oder frontseitig auf das Rohr aufgesetzt und verlängert so den durch das Rohr oder den Schlauch gebildeten Transportkanal, durch welchen die Restpartikel angesaugt werden. Weiter umfasst die Einrichtung die Filtermembran. Diese ist zwischen dem Einlassbereich des Rohrs und der Aufsatzeinrichtung angeordnet, sodass die angesaugten Restpartikel mit dem Transportmedium die Filtermembran erreichen. Dadurch, dass die Filtermembran nun einlassseitig im Rohr oder Schlauch - auch Saugrüssel - angeordnet ist, ist die Anzahl der Restpartikel, die an der Innenwandung des Rohrs sich absetzen können, minimiert.

Das Rohrstück kann ein Rohr, ein Schlauch, ein Saugrüssel oder ein beliebiger Teil oder Abschnitt davon sein, beispielsweise ein Einlassbereich, ein Einlassflansch oder der vordere Abschnitt, beispielsweise die ersten 0 bis 20 cm, vorzugsweise 0 bis 10 cm oder weiter bevorzugt die ersten 0 bis 5 cm, gemessen von einem Einlass des Rohrs entlang des Transportkanals des Rohrs, somit in axiale Richtung des Rohrs.

Das Rohr selber kann starr oder flexibel sein. Vorzugsweise ist das Rohr als flexibles Rohr ausgebildet. In einer Ausführungsform weist das Rohr an der Innenwandung eine Beschichtung auf, insbesondere eine Antihaft-und/oder Antistatikbeschichtung (elektrisch leitend). In einer anderen Ausführungsform ist das Rohr selbst aus einem Antihaftmaterial hergestellt. Vorzugsweise ist die Innenseite oder Innenwandung des Rohrs glatt, das heißt ohne Vorsprünge oder Vertiefungen ausgebildet. Das Rohr weist einen Querschnitt auf. Der Querschnitt ist vorzugsweise ein Ringquerschnitt, genauer ein Kreisringquerschnitt. Das Rohr kann zur Eintrittsseite einen sich erweiternden Konus darstellen. Andere Querschnittsformen sind möglich. Die Wandung des Rohrs ist vorzugsweise konstant, kann aber in einigen Ausführungsformen in axialer Richtung unterschiedlich ausgebildet sein.

Im Einlassbereich weist das Rohr einen Verbindungsabschnitt für eine Verbindung mit der Aufsatzeinrichtung auf. Dies kann beispielsweise eine Verdickung, ein Gewindeabschnitt, ein Rohrflansch oder dergleichen sein. Der Gewindeabschnitt kann als Innengewinde oder als Außengewinde an dem Rohr ausgebildet sein, genau an dem Einlassbereich des Rohrs.

In einer anderen Ausführungsform weist die Aufsatzeinrichtung einen Verbindungsbereich zur Verbindung mit dem Rohr auf. Dieser kann komplementär zu einem Verbindungsabschnitt des Rohrs sein, beispielsweise ein passendes Gewinde wie ein Innen- oder Außengewinde. In anderen Ausführungsformen kann der Verbindungsabschnitt der Aufsatzeinrichtung unabhängig von der Ausführungsform des Rohrs sein, um eine Verbindung auch ohne Verbindungsabschnitt des Rohrs mit dem Rohr zu realisieren.

In noch einer anderen Ausführungsform, oder auch in Kombination mit den vorherigen Ausführungsformen, sind separate Verbindungsmittel vorgesehen, beispielsweise in Form von Klemmmitteln, Klebern, Schrauben, Nieten und dergleichen.

Über den Verbindungsabschnitt oder die Verbindungsabschnitte mit oder ohne zusätzliche separate Verbindungsmittel ist die Aufsatzeinrichtung mit dem Rohrstück an dessen Einlassseite verbunden, insbesondere lösbar verbunden.

Zwischen dem Rohr und der Aufsatzeinrichtung ist die Filtermembran angeordnet, genauer zwischen einem Einlass der Aufsatzeinrichtung und dem Auslass des Rohrs. Dabei ist die Filtermembran bevorzugt benachbart zu dem Auslass der Aufsatzeinrichtung und dem Einlass des Rohrs angeordnet, wobei sich die Bereiche auch überschneiden können. Hierzu ist eine Haltebereich in dem Rohr, in der Aufsatzeinrichtung oder in beiden vorgesehen. Der Haltebereich für die Filtermembran ist beispielsweise als Vorsprung, als Vertiefung, als Nut, als Anformung und/oder dergleichen ausgebildet. Bevorzugt grenzt die Filtermembran an dem Rohrstück und der Aufsatzeinrichtung an, insbesondere kontaktiert die Filtermembran die Aufsatzeinrichtung und das Rohrstück, und wird so von beiden, insbesondere zwischen beiden gehalten. Statt eines direkten Kontakts mit dem Rohrstück und der Aufsatzeinrichtung können Zwischenstücke vorgesehen werden, beispielsweise ein Ring wie ein Federring, O-Ring oder dergleichen. Insbesondere wird die Filtereinrichtung durch Zusammenwirken von Aufsatzeinrichtung und Rohr gehalten, insbesondere durch deren Verbindung - indirekt oder direkt - miteinander.

Die Aufsatzeinrichtung ist im Wesentlichen ringförmig ausgebildet und verlängert somit den Transportkanal des Rohrs, sodass sich ein verlängerter Transportkanal ergibt. Vorzugsweise ist die Aufsatzeinrichtung so ausgebildet, dass der durch die Aufsatzeinrichtung gebildete Kanal einen Querschnitt aufweist, der zu dem Querschnitt des Transportkanals des Rohrs korrespondiert. Insbesondere weist der verlängerte Transportkanal von Rohr und Aufsatzeinrichtung keine Querschnittsverengung oder -erweiterung auf, sodass der Querschnitt des verlängerten Transportkanals zumindest im Bereich von Aufsatzeinrichtung und Einlassbereich des Rohrs gleich groß bleibt und insbesondere keine Ausnehmungen oder Vorsprünge aufweist, an denen Restpartikel haften bleiben können.

Die Innenseite der Aufsatzeinrichtung ist in einer Ausführung mit einer Antihaftbeschichtung beschichtet, sodass möglichst keine Restpartikel an der Innenwandung der Aufsatzeinrichtung haften bleiben. In einer anderen Ausführungsform oder in Kombination zu der vorherigen Ausführungsform ist die Aufsatzeinrichtung aus einem Antihaftmaterial hergestellt. Das axiale Abmaß des Aufsatzeinrichtung ist vorzugsweise kurz im Vergleich zu dem axialen Abmaß des Rohrs. Das axiale Abmaß der Aufsatzeinrichtung liegt vorzugsweise im Bereich kleiner gleich 15 cm, weiter bevorzugt kleiner gleich 10 cm und am meisten bevorzugt kleiner gleich 5 cm. Vorzugsweise ist der Innendurchmesser der Aufsatzeinrichtung größer gleich dem axialen Abmaß des Rohres, das dem Filter nachgelagert ist.

In einer Ausführungsform ist vorgesehen, dass die Aufsatzeinrichtung eine Blaseinheit aufweist, welche ein Medium in eine Richtung im Wesentlichen gegen eine Ansaugrichtung des Transportmediums bläst. Die Blaseinheit ist vorzugsweise eine Düseneinheit. Mit der Blaseinheit kann eine Fluidstrom entgegen der Ansaugrichtung des Transportmediums erzeugt werden. Der Fluidstrom kann linear ausgebildet sein und/oder als Drallstrom. Die Ansaugrichtung ist von der Aufsatzeinrichtung in Richtung Rohr. Dem entgegengesetzt ist die Richtung des Mediums oder Fluids der Blaseinrichtung, wobei entgegen nicht so zu verstehen ist, dass Ansaugrichtung und Blasrichtung im Winkel von 0 bzw. 180 Grad zueinanderstehen, also frontal aufeinander gerichtet sind. Die Blasrichtung ist vorzugsweise winklig zu der Ansaugrichtung in einem Winkel zwischen 0 und 90 Grad, weiter bevorzugt zwischen 0 und 80 Grad und am meisten bevorzugt zwischen 0 und 70 bzw. dem entsprechenden Gegenwinkel. Entgegengesetzt umfasst somit den Bereich eines spitzen Winkels bzw. in anderer Betrachtungsweise einen stumpfen Winkel. Die Blaseinheit umfasst bevorzugt eine Düse, weiter bevorzugt mehrere Düsen, mit denen der Blasstrom geblasen werden kann. Die Blasdüse ist vorzugsweise integriert in der Aufsatzeinrichtung ausgebildet, insbesondere als Kanal, welcher die Innenwandung der Aufsatzeinrichtung durchdringt und somit in fluidischer Verbindung mit dem verlängerten Transportkanal steht. Insbesondere ist der Kanal schräg oder winklig zu einer Mittelachse des Transportkanals ausgerichtet, sodass ein Blasstrom in Richtung Mittelachse blasbar ist. Vorzugsweise sind mehrere Blaskanäle vorgesehen, welche den Blasstrom in Richtung verlängerter Transportkanal blasen. Die Kanäle sitzen in dem Ringkörper der Aufsatzeinrichtung. Mit dem Blasmedium werden die Blasdüsen oder Blaskanäle vorzugsweise über einen in der Aufsatzeinrichtung umlaufenden Ringkanal versorgt, welcher somit mit den Kanälen in fluidischer Wirkverbindung steht. Der Ringkanal wird über einen entsprechenden Blasmediumanschluss mit dem Blasmedium gespeist. Die Blaskanäle blasen das Blasmedium schräg entgegen dem Ansaugstrom, wobei die Blaskanäle in Richtung Mittelachse des verlängerten Transportkanals gerichtet sind. Die Blasdüsen können auch so angeordnet werden, dass beim Blasen ein Drall entsteht. Die Blasluft löst festanhaftende Partikel und erhöht damit die Reinigungswirkung.

Auch ist vorgesehen, dass die Blaseinheit und/oder die Aufsatzeinrichtung ringförmige ausgebildet sind. Mit der ringförmigen Ausbildung wird der verlängerte Transportkanal in seinem Querschnitt nicht beeinflusst. Die Restpartikel lassen sich entlang des verlängerten Transportkanals zu der Membranfiltereinheit transportieren. Der Blasstrom ist so ausgebildet, dass er weiterhin ein Ansaugen von Restpartikeln ermöglicht, also insgesamt schwächer ist, als der Ansaugstrom. Mit dem Blasstrom lassen sich Restpartikel auf dem zu prüfenden Bauteil aufwirbeln und leichter mit dem Ansaugstrom von dem Bauteil absaugen.

Wiederum in einer anderen Ausführungsform ist vorgesehen, dass die Blaseinheit zum Blasen des Mediums mindestens eine Düse aufweist, wobei die Düse derart ausgerichtet ist, dass diese das Medium in eine Richtung hin zu einer Mittelachse des Transportkanals bläst. Die Düse ist vorzugsweise als Kanal in der Aufsatzeinrichtung integriert ausgebildet und steht in fluidischer Wirkverbindung mit dem Ringkanal und dem verlängerten Transportkanal. Das Blasmedium wird von dem Ringkanal durch den Blaskanal in den Transportkanal geblasen. Vorzugsweise sind mehrere Düsen vorgesehen. Die mehreren Düsen sind in einer Ausführungsform so angeordnet, dass diese linear in Richtung Einlassbereich weisen. In einer anderen Ausführungsform sind die Düsen so angeordnet, dass diese einen Drall- und/oder eine Wirbelblasstrom erzeugen. Auch lassen die Düsen sich so anordnen, dass eine Kombination aus linearem Blasstrom und Drallblasstrom erzeugt wird. Diese sind in einer Ausführungsform in Umfangsrichtung der ringförmigen Aufsatzeinrichtung äquidistant angeordnet. In anderen Ausführungsformen sind die Abstände der Kanäle in Umfangsrichtung zumindest teilweise unterschiedlich ausgebildet. Die Düsen bilden somit eine Art Düsenkranz, über welchen sich das Blasmedium in den verlängerten) Transportkanal blasen lässt, linear und/oder mit Drall. Der Ringkanal kann in der Aufsatzeinrichtung integriert ausgebildet sein. In einer anderen Ausführungsform ist der Ringkanal mittels Aufsatzeinrichtung und Rohrstück gebildet.

In einer Ausführungsform ist vorgesehen, dass die Düsen, die Saugdüsen und/oder die Blasdüsen, einzeln oder gemeinsam als Düseneinheit ausgebildet sind, die sich mit der restlichen Anschlusseinrichtung verbinden lassen. Auf diese Weise lassen sich unterschiedliche Düsen mit der restlichen Anschlusseinrichtung verbinden. Um beispielsweise Vertiefungen oder dergleichen, wie zum Beispiel Sacklöcher, vernünftig reinigen zu können, bedarf es verschiedener Düsenaufsätze die auswechselbar sind, vergleichbar wie bei einem Haushaltsstaubsauger. Vorzugsweise sind die Saugdüsen in einem Abstand von der zu reinigenden Oberfläche und somit von dem vordersten Ende der Anschlusseinrichtung angeordnet, dass ein optimales Reinigungsergebnis erzeugt wird. Hierzu sind die Saugdüsen vorzugsweise in einem Abstand von dem vordersten Ende der Anschlusseinrichtung in axialer Richtung beabstandet, der in einem Bereich von 0 bis 25 cm, weiter bevorzugt von 2 bis 20 cm und am meisten bevorzugt in einem Bereich von 5 bis 15 cm liegt. Bei einem Bürstenaufsatz ist der Abstand entsprechend von dem vordersten Ende, der dem zu reinigenden Bauteil am nächsten liegt, zu bemessen. Bei einem Bürstenaufsatz ist der Abstand von dem vordersten Ende des Bürstenaufsatzes, der dem zu reinigenden Bauteil am nächsten liegt, zu bemessen. Das beste Reinigungsergebnis erhält man bei einem axialen Abstand der Saugdüsen, genauer deren Auslassöffnung, von dem zu reinigenden Bauteil in einem Bereich von 5 bis 15 cm. Andere Abstände können je nach Beschaffenheit des Bauteils eingestellt werden. In einer Ausführungsform ist der Düsenaufsatz mit dem Bürstenaufsatz verbunden oder verbindbar. In einer anderen Ausführungsform ist der Düsenaufsatz ohne Bürstenaufsatz ausgebildet. Für eine Anbindung an die (restliche) Anschlusseinrichtung weist der Bürstenaufsatz entsprechende Verbindungsmittel auf, die zu Verbindungsmitteln mit der (restlichen) Anschlusseinrichtung korrespondieren.

In einer weiteren Ausführungsform ist vorgesehen, dass die Aufsatzeinrichtung frontseitig einen Bürstenaufsatz aufweist. Der Bürstenaufsatz kann einteilig mit der Aufsatzeinrichtung ausgebildet sein. Bevorzugt ist der Bürsteneinheit separat ausgebildet und mit dem Basiskörper der Aufsatzeinrichtung, genauer dem ringförmigen Basiskörper der Aufsatzeinrichtung verbunden. Der Bürstenaufsatz weist frontseitig Bürsten auf, mit welchen sich Partikel von dem zu prüfenden Bauteil abbürsten und in den Ansaugstrom bringen lassen. Die Partikel lassen sich somit einerseits durch den Blasstrom und andererseits durch die Bürsten aufwirbeln und so leichter mit dem Ansaugstrom zu der Filtermembran transportieren. Zudem dienen die Bürsten als Abstandshalter. Mit den Bürsten lässt sich vermeiden, dass der Basiskörper der Aufsatzeinrichtung mit dem zu prüfenden Bauteil in Kontakt kommt.

Neben der Abbürstfunktion, also der mechanischen Reinigung, haben die Bürsten weitere Funktionen. Hierzu gehört u.a. die Begrenzung des Raums für eine gezielte Blas- und Saugfunktion an einem Punkt/Fläche/Bereich. Auch lässt sich ein genauer Abstand zu dem Bauteil einstellen, der sich während der Reinigung einhalten lässt. Dieser Abstand lässt sich so einstellen, dass der gewünschte Abstand zu dem Auslass der Saugdüsen zwischen 5 und 15mm, optimal bei 8mm liegt. Dies ist insbesondere bei einer manuellen Bedienung der Einrichtung vorteilhaft, um gleichbleibende und qualitativ hochwertige Reinigungs- bzw. Prüfungsergebnisse zu erzielen.

Die Erfindung schließt zudem die technische Lehre ein, dass bei einem Verfahren zum Filtern von Partikeln zum Nachweis einer technischen Sauberkeit, die Schritte umfasst sind: Bereitstellen eines Rohrstücks mit einer Filtermembran, Ansaugen von Partikeln durch einen Transportkanal des Rohrstücks mittels eines Transportmediums, sodass sich die angesaugten Partikel auf der in oder an dem Transportkanal angeordneten Filtermembran ablagern, wobei die Membran im Öffnungsbereich des Rohrstücks angeordnet wird. Zum Prüfen einer technischen Sauberkeit eines Bauteils werden von diesem Restpartikel mittels eines Transportmediums abgesaugt und das Transportmedium mit den Partikeln zu einer Filtermembran transportiert. Das Transportmedium passiert die Filtermembran. Die Restpartikel setzen sich an oder auf der Filtermembran ab. Die Filtermembran wird dann ausgewertet. Erfindungsgemäß wird die Filtermembran einlassseitig an dem Rohr oder Rohrstück angeordnet. Dies hat den Vorteil, dass möglichst wenig Restpartikel an der Rohrinnenwandung haften bleiben können. Auf diese Weise lässt sich die Auswertung qualitativ verbessern.

In einer Ausführungsform ist vorgesehen, dass während des Ansaugens ein gegen eine Ansaugrichtung gerichteter Blasstrom vorgesehen wird.

In einer weiteren Ausführungsform ist vorgesehen, dass der Blasstrom nach innen in eine Richtung zu einer Mittelachse des Transportkanals gerichtet wird.

Zudem ist in einer Ausführungsform vorgesehen, dass frontseitig an der Anschlusseinrichtung ein Bürstenaufsatz vorgesehen wird, um ein schonendes Absaugen von Partikeln von einem Bauteil zu realisieren und/oder einen definierten Abstand des zu prüfenden Bauteils zu dem Auslass der Ansaugdüsen zu gewährleisten. Bei zu großem Abstand bleiben Partikel ggf. an dem Bauteil haften.

Nicht zuletzt schließt die Erfindung die technische Lehre ein, dass bei einer Filtervorrichtung zum Filtern von Partikeln zum Nachweis einer technischen Sauberkeit, umfassend eine Einrichtung zum Ansaugen und Blasen eines Mediums, vorgesehen ist, dass eine vorstehend beschriebene Anschlusseinrichtung vorgesehen ist, um ein vorstehend beschriebenes Verfahren durchzuführen.

Bei der Filtereinrichtung wird ein bearbeitetes und zu prüfendes Bauteil in den Bereich der Anschlusseinrichtung gebracht und dieses in einem Strömungsbereich des Mediums gebracht. Das Transportmedium mit vorhandenen Restpartikeln wird der Filtervorrichtung mit mindestens einer Filtereinheit zugeführt. Die Filtereinheit ist als Membranfilter oder Filtermembran ausgebildet. Die Filtermembran ist in einer Art Membranhalter auswechselbar gehalten. Der Membranhalter ist dabei zwischen Rohrstück und Aufsatzeinrichtung ausgebildet. Genauer ist der Membranhalter durch das Rohrstück und die fluidisch davor angeordnete, mit dem Rohrstück zusammenwirkende Aufsatzeinrichtung ausgebildet. Rohrstück und Aufsatzeinrichtung grenzen unmittelbar aneinader an und/oder stehen in Eingriff miteinander und/oder kontaktieren einander.

Die Filtervorrichtung ist zum Filtern von bei spanender Bearbeitung, bei möglicher Verschmutzung durch Umgebungsbedingungen, bei Montageprozessen - automatisiert oder manuell - Stanzprozessen oder sonstiger Bearbeitung anfallenden Restpartikeln für eine optische Reinheitsprüfung zum Nachweis einer Technischen Sauberkeit ausgebildet, bei dem ein bearbeitetes Bauteil mit einem Transportmedium und/oder einem Blasmedium in Kontakt gebracht wird und das gesamte Transportmedium mit vorhandenen Restpartikeln der Filtereinrichtung mit mindestens einer Filtereinheit - kurz Filter - insbesondere einer Membranfiltereinheit - kurz Membranfilter oder Filtermembran- zugeführt wird. Nassverfahren werden hierbei vorzugsweise für Bauteile, die klassisch spanend bearbeitet wurden, eingesetzt. Luftextraktion und/oder Saugextraktion wird hauptsächlich bei Verschmutzungen durch Umgebungsbedingungen, Montageprozessen, Stanzprozessen und dergleichen angewendet, insbesondere im Bereich Verpackung, Elektronik, Optik. Die Vorrichtung umfasst einen Membranhalter oder Filterhalter, in dem auswechselbar mindestens ein Filter, insbesondere Membranfilter, aufgenommen ist, wobei die Filtereinheit derart angeordnet ist, dass diese zumindest in einem Bereich sich über einen Durchflussquerschnitt des Transportmediums mit Restpartikeln erstreckt, sodass das Transportmedium zumindest teilweise, vorzugsweise das gesamte Transportmedium, mit den Restpartikeln die Filtereinheit passiert. In einer Ausführungsform können Verteilmittel vorgesehen werden, welche die Restpartikel über die Filtereinheit verteilt, insbesondere gleichmäßig verteilt, ablagern, sodass eine optische Auswertung der auf der Filtereinheit verbliebenen Restpartikel verbessert ist. Das Bearbeiten des zu prüfenden Bauteils kann jede Art von Bearbeitung darstellen. Die Reinheitsprüfung erfolgt in einer Ausführungsform optisch. In anderen Ausführungsformen sind andere Arten der Reinheitsprüfung, insbesondere eine gravimetrische Reinheitsprüfung vorgesehen. Entsprechend erfolgt die Auswertung bevorzugt optisch, in anderen Ausführungsformen auf andere Art, beispielsweise gravimetrisch. Das Transportmedium wird bevorzugt vollständig mit den Restpartikeln durch die Filtereinheit geleitet. In anderen Ausführungsformen wird nur ein Teil des Transportmediums mit den Restpartikeln durch die Filtereinheit geleitet. Der Teil des Transportmediums wird bevorzugt vorbestimmt. Aufgrund des vorbestimmten Teils wird eine Restverschmutzung des Teilstroms festgelegt. Somit muss für eine Reinheitsbestimmung nicht der gesamte Transportmedium-Strom samt Restpartikeln durch die Filtereinheit geführt werden, sodass das gesamte Verfahren schneller durchführbar ist. Das Bauteil kann als separates, einzelnes Bauteil oder auch als Baugruppe oder dergleichen vorliegen. Die Filtereinheit ist derart angeordnet, dass das gesamte Transportmedium die Filtereinheit passieren muss. Die Filtereinheit kann einen oder mehrere Filter aufweisen. Vereinfacht wird von einem Filter oder einer Filtermembran gesprochen, der bzw. die folglich einteilig oder mehrteilig ausgebildet sein kann. Die Filtereinheit ist vorzugsweise als Membranfiltereinheit ausgebildet, kurz Membranfilter oder Filtermembran.

Das Reinigungsverfahren wird durchgeführt, wobei während des Reinigungsverfahrens der Saugdruck, z.B. als Unterdruck, anliegt. In einer Ausführungsform kann zusätzlich zu dem Saugstrom parallel über Düsen Blasluft zugeführt werden, welche die Reinigungswirkung verstärkt. Die Düsen für den Saugstrom lassen sich in einer Ausführungsform auswechseln, um einen optimalen Abstand zu dem zu prüfenden Bauteil einzustellen. So lässt sich ein Düsenaufsatz beispielsweise für eine Prüfung einer Vertiefung einer Verpackung vorsehen, während ein andere Düsenaufsatz für andere Zwecke vorgesehen ist. So lassen sich für unterschiedliche Prüfungen unterschiedliche Düsenaufsätze vorsehen, die mit der restlichen Anschlusseinrichtung entsprechend verbindbar sind. Die Düsen weisen in einer Ausführungsform einen sich verjüngenden Durchmesser auf, insbesondere einen sich entgegen der Ansaugrichtung verjüngenden Durchmesser auf. Die Verjüngung ist derart eingestellt, dass ein ausreichend starker Saugstrom erzeugt wird. Weiter kann eine Aufsteckbürste vorgesehen werden. Mit dieser lassen sich durch Relativbewegung der Bürste zu dem Bauteil weitere Partikel abreinigen. Auch lassen sich eine Abstandsfunktion oder weitere Funktionen realisieren. Gegen Ende des Abreinigungsvorgangs oder Reinigungsverfahrens wird zuerst die Blasluft abgestellt. Anschließend wird die Anschlusseinrichtung in eine Position gebracht, so dass die Partikel durch Schwerkraft oben auf der Membran liegen bleiben. Die Filtermembran ist dabei in einer im Wesentlichen horizontalen oder waagerechten Position. Erst dann wird die Bürste abgezogen und anschließend abgesaugt. Danach wird der Saugdruck abgestellt. Drauf folgend wird die Membran entfernt und analysiert.

Der Aufbau der Anschlusseinrichtung sieht zusammenfassend wie folgt aus. Einlassseitig ist die Aufsatzeinrichtung vorgesehen. In der Aufsatzeinrichtung und/oder endseitig an der Aufsatzeinrichtung ist die Filtermembran angeordnet. Ansaugstromabwärts schließt das Rohrstück, insbesondere das Ansaugrohrstück an. Die Filtermembran ist somit in Ansaugstromrichtung hinter der Einlassöffnung der Aufsatzeinrichtung und vor der Auslassöffnung des Rohrstücks, insbesondere an und/oder vor der Einlassöffnung des Rohrstücks angeordnet. Anschlusseinrichtung und Rohrstück bilden den Transportkanal aus. Die Filtermembran ist derart angeordnet, dass die angesaugten Partikel durch den eingangsseitigen Transportkanal strömen. Einlassseitig werden die Partikel samt Transportmedium durch die Aufsatzeinrichtung entlang des Transportkanals angesaugt. Die Partikel treffen stromabwärts zusammen mit dem Transportmedium auf die Filtermembran. Dort werden die Partikel abgelagert und das Transportmedium wird weiter durch das Rohrstück transportiert. Der durch die Aufsatzeinrichtung gebildete Transportkanal(-abschnitt) ist bevorzugt kürzer als der durch das Rohrstück gebildete Transportkanal(-abschnitt). Anders ausgedrückt sitzt die Filtermembran näher an der Einlassseite der Aufsatzeinrichtung als an der Auslassöffnung des Rohrstücks. Aufsatzeinrichtung und Rohrstück kontaktieren einander und/oder sind in Eingriff miteinander. Somit bilden Rohrstück und Aufsatzeinrichtung einen Membranhalter aus, in welchem die Membran gehalten ist. Durch den direkten Kontakt und/oder den direkten Eingriff von Aufsatzeinrichtung und Rohrstück sind keine weiteren Bauteile zum Halten der Filtermembran zwischen Rohrstück und Aufsatzeinrichtung erforderlich. Vorzugsweise ist das Rohrstück einteilig ausgebildet. Zur Verbindung von Rohrstück und Aufsatzeinrichtung kann ein Verbindungsmittel vorgesehen sein. An das Rohrstück können endseitig weitere Einrichtungen angeschlossen sein, welche den Transportkanal verlängern. Dabei verlässt das Transportmedium das Rohrstück endseitig partikelgereinigt, da die Partikel an der Filtermembran herausgefiltert sind. Die Filtermembran sitzt näher an der Eingangsseite des Rohrstücks als an dessen Ausgangsseite. Aufsatzeinrichtung und Rohrstück schließen unmittelbar aneinander mit zwischengeschalteter Filtermembran an. An die Anschlusseinrichtung kann endseitig eine Leitung zum Ansaugen und somit zum Weiterführen des Transportmediums angeschlossen sein. Insbesondere weist das Rohrstück endseitig einen Anschluss für eine das Transportmedium weiterführende Transportleitung auf. Die Transportleitung ist von einer erfindungsgemäßen Filtervorrichtung umfasst. Die Filtervorrichtung umfasst somit eine Einrichtung zum Ansaugen eines Transportmediums. Die Einrichtung umfasst die Transportleitung, welche endseitig an der Aufsatzeinrichtung angeschlossen ist. Weiter umfasst die Filtervorrichtung eine Einrichtung zum Blasen eines Mediums zum Erzeugen eines Blasstroms. Der Blasstrom wird über eine entsprechende Leitung eingangsseitig zu der Aufsatzeinrichtung geführt. Beide Leitungen stehen mit der Aufsatzeinrichtung in fluidischer Verbindung. Die Einrichtung zum Blasen kann optional vorgesehen sein und/oder mit der Ansaugeinrichtung integriert ausgebildet sein. Beide Einrichtungen können auch separat ausgebildet sein. Die Aufsatzeinrichtung ist vorzugsweise als nicht-flexibles Bauteil ausgebildet und umfasst vorzugsweise keine flexiblen Leitungselemente wie einen Schlauch oder dergleichen. Die Anschlusseinrichtung ist derart ausgebildet, dass durch die Aufsatzeinrichtung das Transportmedium mit (Rest-)Partikeln strömt, die Partikel endseitig der Aufsatzeinrichtung und/oder eingangsseitig des Rohrstücks durch die dort angeordnete Filtermembran gefiltert werden und dann das Transportmedium partikelgereinigt durch Rohrstück strömt und dieses von den (Rest-)Partikeln gereinigt verlässt. Die Aufsatzeinrichtung ist insbesondere als eine den Transportkanal in Richtung eines zu prüfenden Prüflings verlängernde Aufsatzeinrichtung, also in Richtung weg von der Filtermembran verlängernde Aufsatzeinrichtung ausgebildet. Gesehen in Richtung vom Prüfling hin zu Filtermembran, somit in Ansaugrichtung, ist die Anordnung wie folgt: Prüfling - Aufsatzeinrichtung-Membranfilter-Rohrstück und dann Einrichtungen zum Ansaugen und/oder Blasen eines Mediums, beispielsweise eines Vakuumerzeugers. Bei Vorhandensein von Düsen in der Anschlusseinrichtung können die Düsen derart angeordnet sein, dass diese in dem Blasstrom einen Drall erzeugen.

Weitere, die Erfindung verbessernde Maßnahmen sind in den Unteransprüchen angegeben oder ergeben sich aus der nachfolgenden Beschreibung von Ausführungsbeispielen der Erfindung, welche in den Figuren schematisch dargestellt sind. Für gleiche oder ähnliche Bauteile oder Merkmale werden dabei einheitliche Bezugszeichen verwendet. Merkmale oder Bauteile verschiedener Ausführungsformen können kombiniert werden, um so weitere Ausführungsformen zu erhalten. Sämtliche aus den Ansprüchen der Beschreibung oder Zeichnungen hervorgehenden Merkmale und/oder Vorteile einschließlich konstruktiver Einzelheiten, räumliche Anordnung und Verfahrensschritte, können so für sich als auch in verschiedensten Kombinationen erfindungswesentlich sein.

Es zeigen:
- Fig. 1: schematisch in einer geschnittenen Seitenansicht eine Ausführungsform einer Anschlusseinrichtung und
- Fig. 2: schematisch in einer geschnittenen Seitenansicht eine weitere Ausführungsform einer Anschlusseinrichtung.

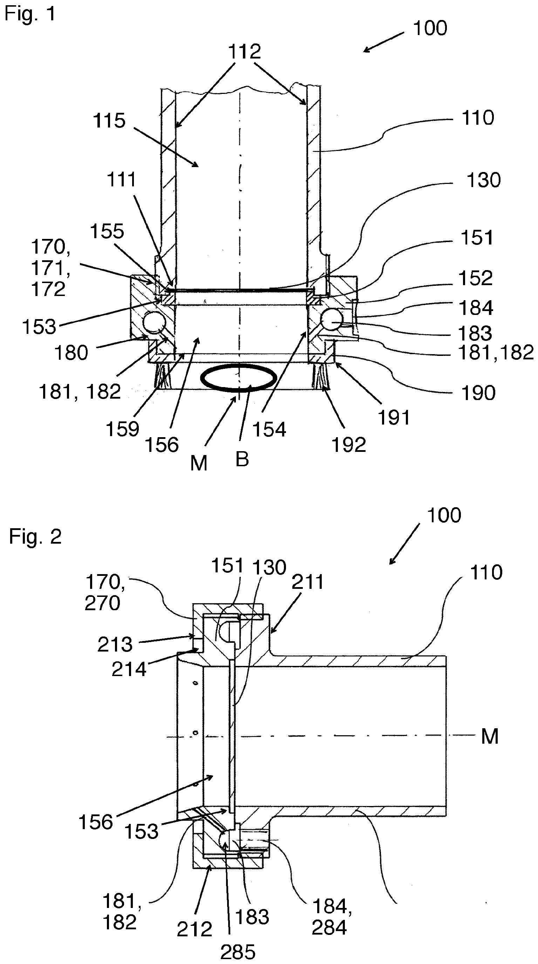

Die Fig. 1 und 2 zeigen zwei Ausführungsformen einer Anschlusseinrichtung 100. Die Anschlusseinrichtung 100 umfasst einen Schlauch, Rohr oder Rohrstück 110, eine Filtermembran 130 und ein Aufsatzeinrichtung 150. Die Aufsatzeinrichtung 150 nach Fig. 1 ist mehrteilig ausgeführt. Dabei umfasst die Aufsatzeinrichtung 150 neben einem Basiskörper 151 einen Ring 152. Zwischen der Aufsatzeinrichtung 150 und dem Rohrstück 110 ist die Filtermembran 130 gehalten. Hierzu weist das Rohrstück 110 in dessen Endbereich oder einlassseitig einen Halteabschnitt 111 auf. Der Halteabschnitt 111 ist als Vertiefung zur Aufnahme der kreisscheibenförmigen Filtermembran 130 ausgebildet. Die Vertiefung ist als umlaufende Vertiefung an einer Innenseite oder Innenwandung 112 des Rohrstücks ausgebildet. Korrespondierend zu dem Halteabschnitt 111 des Rohrstücks 112 weist der Basiskörper 151 einen Halteabschnitt 153 auf. Der Halteabschnitt 153 ist als Vertiefung zur Aufnahme des kreisringförmigen Rings 152 ausgebildet. Die Vertiefung ist als umlaufende Vertiefung an einer Innenseite oder Innenwandung 154 des Basiskörpers 151 ausgebildet. Der Ring 152 weist einen Innenabsatz 155 auf, sodass dieser in den beiden Halteabschnitten 111 und 153 aufnehmbar ist. Der Halteabschnitt 111 des Rohrstücks 110 weist einen geringeren Durchmesser auf als der Halteabschnitt 153 der Anschlusseinrichtung. Dieser Unterschied wird durch den Innenabsatz 155 ausgeglichen. Der Innenabsatz 155 ist derart ausgebildet, dass der Ring 152 mit einer Seite die Filtermembran 130 kontaktiert und mit einer durch den Innenabsatz 155 gebildeten Anlageseite eine Frontseite des Rohrstücks 110. Mit der gegenüberliegenden Seite, kontaktiert der Ring 152 den Basiskörper 151.

Für eine Verbindung von Rohrstück 110 und Anschlusseinrichtung 130 sind Verbindungsmittel 170 vorgesehen. Die Verbindungsmittel 170 sind in der in Fig. 1 dargestellten Ausführungsform als Verbindungsabschnitte 171 und 172 ausgebildet. Der Verbindungsabschnitt 171 ist der rohrstückseitige Verbindungsabschnitt 171. Der Verbindungsabschnitt 172 ist der Verbindungsabschnitt 172 der Anschlusseinrichtung 150. Die Verbindungsmittel 170 sind vorliegend als Gewindepaarung ausgebildet. Der Verbindungsabschnitt 171 umfasst eine Materialverdickung endseitig an dem Rohrstück 110. Diese weist für eine Verbindung mit der Anschlusseinrichtung 150 ein Gewinde, genauer ein Außengewinde auf. Korrespondierend zu dem Außengewinde des Rohrstücks 110 weist die Anschlusseinrichtung 100, genauer der Basiskörper 151 ein dazu korrespondierendes Innengewinde auf. Über diese Gewindepaarung aus Außengewinde und Innengewinde ist eine Verbindung von Aufsatzeinrichtung 150 und Rohrstück 110 realisiert.

Das Rohrstück 110 bildet einen sich entlang einer Mittelachse M erstreckenden Transportkanal 115 für ein Transportmedium aus. Das Transportmedium ist in der Regel gasförmig, insbesondere Ansaugluft. Über das Transportmedium lassen sich Restpartikel von einem zu prüfenden Bauteil durch den Transportkanal 115 bewegen, genauer (an-)saugen. Die Aufsatzeinrichtung 150, genauer der Basiskörper 151, weist aufgrund der ringförmigen Ausgestaltung einen Kanal 156 auf. Der Kanal 156 setzt den Transportkanal 115 bei Verbindung von Rohrstück 110 und Aufsatzeinrichtung 150 fort, sodass ein verlängerter Transportkanal 115 realisiert ist. Dabei sind die Kanäle 115 und 156 so ausgebildet, dass der verlängerte Transportkanal 115 versatzfrei durch den Kanal 156 fortgesetzt wird.

Die Anschlusseinrichtung 150 umfasst weiter eine Blaseinheit 180. Mit der Blaseinheit 180 wird ein Blasmedium, welches hier das gleiche Medium wie das Transportmedium ist, nämlich (Druck-)Luft, entgegengesetzt zu der Ansaugrichtung des Transportmediums geblasen. Dabei erfolgt das Blasen des Blasmediums in einem Winkel zu der Mittelachse M, vorzugsweise in einem spitzen Winkel. Hierfür umfasst die Blaseinheit 180 mehrere Düsen 181, hier in Form von in den Basiskörper 151 integrierten Kanälen 182. Die Kanäle 182 werden über einen Ringkanal 183, der über einen Blasanschluss 184 mit einem Blasmedium-Vorrat (hier nicht dargestellt) fluidisch verbunden ist, mit dem Blasmedium versorgt.

Die Kanäle 182 sind entgegengesetzt zur Ansaugrichtung in Richtung Mittelachse M orientiert, sodass durch die Düsen 181 strömendes Blasmedium in den verlängerten Transportkanal 115 geblasen wird und insbesondere in einen Bereich B vor eine Einlassöffnung 159 der Anschlusseinrichtung 150 gedanklich auf die gedachte Mittelachse M trifft. Die in Fig. 1 dargestellte Ausführungsform umfasst weiter einen Bürstenaufsatz 190. Der Bürstenaufsatz 190 ist als Aufsteckbürste 190 ausgebildet und weist einen Bürstenhalter 191 auf, an dem der Bürstenbesatz 192, beispielsweise in Form von Borsten an der Aufsteckbürste gehalten sind. Über den Bürstenhalter 191 ist die Aufsteckbürste 190 mit der Anschlusseinrichtung 150 verbunden. Hierzu sind entsprechende Verbindungsmittel vorgesehen. In der dargestellten Ausführungsform ist die Aufsteckbürste 190 auf eine einlassseitige Frontseite der Anschlusseinrichtung 100 aufgesteckt.

Fig. 2 zeigt eine gegenüber Fig. 1 veränderte Ausführungsform. Das Rohrstück 110 weist einlassseitig eine flanschartige Materialverdickung, kurz einen Flansch 211 auf. Durch den Flansch 211 verläuft in axiale Richtung, also parallel zu der Mittelachse M, der Blasanschluss 184. Dieser ist als Durchgangsöffnung 284 ausgebildet. In der dargestellten Ausführungsform weist die Durchgangsöffnung 284 ein Innengewinde auf, sodass hier eine Leitung für ein Blasmedium, beispielsweise Drucklauf, sicher mit dem Flansch 211 verbindbar ist. An den Blasanschluss 184 schließt in fluidischer Verbindung der Ringkanal 183 an. Dieser wird, anders als in Fig. 1, sowohl durch das Rohrstück 110 als auch durch den Basiskörper 151 gebildet. Der Basiskörper 151 bildet hierzu eine umlaufende Vertiefung 285 aus, die zusammenwirkend mit einer zu der Vertiefung 285 weisenden Fläche des ebenfalls umlaufenden Flansches 211 den Ringkanal 183 ausbildet. Von dem Ringkanal 183 gehen in fluidischer Verbindung mit diesem die Düsen 181, genauer die Kanäle 182 ab. Diese sind analog zu dem in Fig. 1 dargestellten Ausführungsbeispiel ausgebildet. Die Verbindung der Aufsatzeinrichtung 150 mit dem Rohrstück 110 erfolgt über ein zusätzliches Verbindungsmittel 170, welches mit den in das Rohrstück 110 integrierten Verbindungsmitteln 170 zusammenwirkt. Das Rohrstück 110 weist als integriertes Verbindungsmittel 170 ein Außengewinde auf. Das Außengewinde ist an der Außenseite des Flansches 211 ausgebildet. Das separate Verbindungsmittel 170 ist als Überwurfmutter 270 ausgebildet. Diese ist im Schnitt etwa topfförmig mit einem Boden 213 und einer davon senkrecht abragenden kreisringförmigen Wandung 212 ausgebildet. Der Boden 213 weist eine Durchgangsöffnung 214 auf, welche den verlängerten Kanal 156 nicht beeinflusst. Mit dem Boden 213 grenzt die Überwurfmutter 270 an eine in Richtung Einlass gerichtete Anschlagfläche des Basiskörpers 151 an. Die Wandung 212 der anliegenden Überwurfmutter 270 ragt in Richtung Flansch 211. An der Innenseite der Wandung 212 ist ein Innengewinde ausgebildet. Das Innengewinde korrespondiert zu dem Außengewinde des Flansches 211. Zur Befestigung der Aufsatzeinrichtung 150 an dem Rohrstück 110 wird die Überwurfmutter 270 über den Basiskörper 151 gestülpt und mit dem Innengewinde auf das Außengewinde des Flansches 211 gedreht. Die Filtermembran 130 wird zwischen Basiskörper 151 und Flansch 211 bzw. Einlassseite des Rohrstücks 110 gehalten. In der in Fig. 2 dargestellten Ausführungsform ist rohrstückseitig kein besonderer Halteabschnitt ausgebildet. Die Filtermembran 130 liegt plan an der Endseite des Rohrstücks 110 an. An dem Basiskörper 151 ist ein Halteabschnitt 153 in Form einer umlaufenden Vertiefung vorgesehen. Der Innendurchmesser der Vertiefung ist an den Außendurchmesser der Filtermembran 130 angepasst, sodass diese sicher seitlich durch den Halteabschnitt 153 gehalten ist. In Fig. 2 nicht dargestellt, aber optional vorsehbar, ist der Bürstenaufsatz 190.

Zusammenfassend lässt sich Folgendes festhalten. Die Herausforderung aller Reinheitsprüfanlagen ist es möglichst viele Partikel, die sich auf dem Bauteil befunden haben, auf eine Filtermembran 130 zu bekommen, die dann automatisiert unter einem Mikroskop ausgewertet wird. Erfindungsgemäß wird die Filtermembran 130 so weit wie möglich vorne an dem Rohrstück 110 positioniert, um möglichst wenig Restpartikel auf dem Weg zur Filtermembran 130 zu verlieren. Die kurze Distanz zur Vorderseite des Rohrstücks 110 ist zudem für die Unversehrtheit der angesaugten Restpartikel erforderlich. Bei längeren Saugstrecken können die Partikel aufgrund von einwirkenden Kräften zerstört werden, beispielsweise durch Umformung, Abrief, Bruch etc. Dadurch würde ein zuvor in seiner Größe kritischer Partikel zerkleinert und das Bauteil würde ggf. fälschlicherweise die Sauberkeitsprüfung bestehen. Durch die kürzer Distanz, die der Partikel im Saugstrom zurücklegen muss, verringert das Risiko einer ungewollten Partikelzerkleinerung. Da der Reinigungsvorgang auch mit waagrecht hängender Membran 130 und Ansaugen von unten erfolgt, ist das Verhältnis von Ansaug- und Blasströmung derart eingestellt, dass Partikel auf Grund der Schwerkraft sich nicht von der Membran 130 lösen. Die erfindungsgemäße Einrichtung kann in einen automatisierten Prüfablauf z.B. mit Roboter eingesetzt werden. Es konnte durch Versuche nachgewiesen werden, dass die angesaugten Restpartikel auf der Membran 130 auch bei einem Blasstrom verbleiben, solange ein Unterdruck anliegt, somit der Ansaugstrom stärker als der Blasstrom ist. Am Ende des Reinigungsvorgangs wird die Membran 130 in eine waagrechte Lage gebracht, damit die Partikel oben auf der Membran 130 liegen, bevor der Saugdruck abgestellt wird. Anschließend kann die Membran 130 entfernt und direkt analysiert werden. Die Membran 130 muss nicht getrocknet werden wie im herkömmlichen Verfahren. Dieses Verfahren benötigt keinen Reiniger, ist schneller und in eine Produktionslinie integrierbar. Durch gleichzeitiges Blasen während des Absaugvorgangs konnte die Reinigungswirkung beträchtlich gesteigert werden. Dies wurde durch Versuche bewiesen, ebenso durch eine Aufsteckbürste 190 die zum einen mechanisch reinigt und auch als Abstandshalter zum Prüfwerkstück funktioniert. Die Filtermembran 130 wird durch einen Ring / durch den als Überwurfmutter 270 ausgebildeten Basiskörper 151 auf das Rohrstück 110 gedrückt und damit seitlich gedichtet. Über die Überwurfmutter 270 wird gereinigte Druckluft durch den Blasanschluss 184 aus einem Ringkanal 183 dem Transportkanal 115 zugeführt. Hierzu ragen von dem Ringkanal 153 am Umfang mehrere Blasdüsen 181 ab, die Richtung Mittellinie M gerichtet sind. Sobald das Rohrstück 110 mit der Filtermembran 130 in eine waagrechte oder horizontale Lage gebracht wird, so dass die Partikel oben auf der Filtermembran 130 liegen und der Saugdruck noch anliegt, wird die Aufsteckbürste 190 abgezogen und anschließend abgesaugt. Der Blasdruck wird am Ende des Reinigungsvorgangs abgestellt. Dadurch gehen möglichst wenig Partikel auf dem Bürstenaufsatz 190 verloren. Erst nach Reinigen der Bürste wird der Saugdruck abgestellt und die Filtermembran 130 entnommen.

In der Ausführungsform nach Fig. 2 ist die Anschlusseinrichtung 100 ohne die Aufsteckbürste ausgebildet. Hier ist der Druckluftanschluss fest am Rohrstück 110 ausgebildet, genauer an dessen Flansch 211. Die Filtermembran 130 wird durch die Überwurfmutter 270 gehalten und gedichtet. Die Blasluft kommt aus dem Blasanschluss 184 in den Ringkanal 183 und von dort zu den Blasdüsen 180. Von dort wird die Blasluft in Richtung Mittelachse M winklig gerichtet.

### Bezugszeichenliste

- 100: Anschlusseinrichtung
- 110: Rohr(stück)
- 111: Halteabschnitt
- 112: Innenwandung
- 115: Transportkanal
- 130: Filtermembran
- 150: Aufsatzeinrichtung
- 151: Basiskörper
- 152: Ring
- 153: Halteabschnitt
- 154: Innenseite/Innenwandung
- 155: Innenabsatz
- 156: Kanal
- 159: Einlassöffnung
- 170: Verbindungsmittel
- 171: Verbindungsabschnitt
- 172: Verbindungsabschnitt
- 180: Blaseinheit
- 181: Düse
- 182: Kanal
- 183: Ringkanal
- 184: Blasanschluss
- 190: Bürstenaufsatz/ Aufsteckbürste
- 191: Bürstenhalter
- 192: Bürstenbesatz
- 211: Flansch
- 212: Wandung
- 213: Boden
- 214: Durchgangsöffnung
- 270: Überwurfmutter
- 284: Durchgangsöffnung
- 285: Vertiefung
- B: Bereich
- M: Mittellinie

## Patentansprüche

1. Anschlusseinrichtung (100) für eine Reinheitsprüfanlage zum Nachweis einer Technischen Sauberkeit,
umfassend ein Rohrstück (110), welches einen Transportkanal (115) aufweist, durch welchen ein Transportmedium und/oder Partikel führbar ist/sind, insbesondere ein Ansaugrohrstück, und
eine Filtermembran (130), welche an dem Rohrstück (110) so angeordnet ist, dass die mit dem Transportmedium transportierten Partikel sich auf der Filtermembran (130) für eine Reinheitsprüfung ablagern, **dadurch gekennzeichnet, dass**
eine den Transportkanal (115) des Rohrstücks (110) verlängernde Aufsatzeinrichtung (150) an einem Öffnungsbereich des Rohrstücks (110) angeordnet ist und die Filtermembran (130) zwischen dem Rohrstück (110) und der Aufsatzeinrichtung (150) in dem Transportkanal angeordnet ist.

2. Anschlusseinrichtung (100) nach Anspruch 1, **dadurch gekennzeichnet, dass**
die Aufsatzeinrichtung (150) eine Blaseinheit (180) aufweist, welche ein Medium in eine Richtung im Wesentlichen gegen eine Ansaugrichtung des Transportmediums bläst.

3. Anschlusseinrichtung (100) nach Anspruch 1 oder 2, **dadurch gekennzeichnet, dass**
die Blaseinheit (180) und/oder die Aufsatzeinrichtung (150) ringförmige ausgebildet sind.

4. Anschlusseinrichtung (100) nach einem der vorherigen Ansprüche 1 bis 3, **dadurch gekennzeichnet, dass**
die Blaseinheit (180) zum Blasen des Mediums mindestens eine Düse (181) aufweist, wobei die Düse (181) derart ausgerichtet ist, dass diese das Medium in eine Richtung hin zu einer Mittelachse (M) des Transportkanals (115) bläst.

5. Anschlusseinrichtung (100) nach einem der vorherigen Ansprüche 1 bis 4, **dadurch gekennzeichnet, dass**
die Aufsatzeinrichtung (150) frontseitig einen Bürstenaufsatz (190) aufweist.

6. Verfahren zum Filtern von Partikeln zum Nachweis einer technischen Sauberkeit, insbesondere mittels einer Anschlusseinrichtung (100) nach einem der vorherigen Ansprüche 1 bis 5, umfassend die Schritte: Bereitstellen eines Rohrstücks (110) mit einer Filtermembran (130), Ansaugen von Partikeln durch einen Transportkanal (115) des Rohrstücks (110) mittels eines Transportmediums, sodass sich die angesaugten Partikel auf der in oder an dem Transportkanal (115) angeordneten Filtermembran (130) ablagern, **dadurch gekennzeichnet, dass** die Filtermembran (130) im Öffnungsbereich des Rohrstücks (110) angeordnet wird.

7. Verfahren nach Anspruch 6, **dadurch gekennzeichnet, dass** während des Ansaugens ein gegen eine Ansaugrichtung gerichteter Blasstrom vorgesehen wird.

8. Verfahren nach einem der vorherigen Ansprüche 6 oder 7,
**dadurch gekennzeichnet, dass**
der Blasstrom nach innen in eine Richtung zu einer Mittelachse (M) des Transportkanals (115) gerichtet wird.

9. Verfahren nach einem der vorherigen Ansprüche 6 bis 8, **dadurch gekennzeichnet, dass**
frontseitig an der Anschlusseinrichtung (150) ein Bürstenaufsatz (190) vorgesehen wird, um ein schonendes Absaugen von Partikeln von einem Bauteil zu realisieren und gleichzeitig als Abstandshalter zum Werkstück funktioniert.

10. Filtervorrichtung zum Filtern von Partikeln zum Nachweis einer technischen Sauberkeit, umfassend eine Einrichtung zum Ansaugen und Blasen eines Mediums, **dadurch gekennzeichnet, dass**
eine Anschlusseinrichtung (100) nach einem der vorherigen Ansprüche 1 bis 5 vorgesehen ist, um ein Verfahren nach einem der vorherigen Ansprüche 6 bis 9 durchzuführen.
